# EUROPEAN PATENT APPLICATION

(11) **EP 4 636 607 A1**
(43) Date of publication of application: **22.10.2025**
(21) Application number: 23904127.0
(22) Date of filing: 11.12.2023
(51) Int. Cl.: G06F 16/22, G06F 16/24, H04L 43/026

(54) **DATA ANALYSIS METHOD, APPARATUS, DEVICE, AND STORAGE MEDIUM**

(30) Priority: 16.12.2022 CN 202211627335
(71) Applicant: Lemon Inc., Grand Cayman, KY1-1205 (KY)
(72) Inventor: CAI, Jiahui, Beijing 100028 (CN)
(74) Representative: Grünecker Patent- und Rechtsanwälte PartG mbB
(86) International application number: PCT/SG2023/050820
(87) International publication number: WO 2024/128973

(57) **Abstract**

Embodiments of the disclosure provide a method, apparatus, device and computer readable storage medium for data analysis. In the method, based on respective code repositories of a plurality of nodes downstream of a first node, a plurality of respective field query databases are created, wherein data of a target type flows through the first node; a query is made for a field associated with the data of the target type in the plurality of field query databases; and based on a result of the querying, a flow direction of the data of the target type from the first node to the plurality of nodes is determined. In this way, the data of the target type can be effectively tracked from an overall perspective.

## Description

The present application claims priority to Chinese Patent Application No. 202211627335.7, filed on Dec. 16, 2022, entitled "METHOD, APPARATUS, DEVICE, AND STORAGE MEDIUM FOR DATA ANALYSIS", the entirety of which is incorporated herein by reference.

### FIELD

Example embodiments of the present disclosure generally relate to data analysis, and more particularly, to a method, apparatus, device and computer-readable storage medium for data analysis.

### BACKGROUND

Data analysis may be applied to various industries, including finance, automobiles, catering, telecommunications, and entertainment, among others. By analyzing the data, useful information guiding human production and life may be extracted. Data governance is an important aspect of data analysis. Data governance may include operations such as data collection, transmission, storage, access, sharing, destruction and the like. Through data governance, data security, accuracy, availability and usability may be ensured. For example, governance of user data may protect the security of user data throughout the data lifecycle.

In a data governance process, it is often necessary to determine an association relationship between data, also referred to as a "data lineage". The data lineage may describe flow behaviors of the data throughout a whole system. It is desirable to be able to efficiently analyze a complete data flow direction.

### SUMMARY

In a first aspect of the present disclosure, a method for data analysis is provided. The method comprises: creating, based on respective code repositories of a plurality of nodes downstream of a first node, a plurality of respective field query databases, wherein data of a target type flows through the first node; querying for a field associated with the data of the target type in the plurality of field query databases; and determining, based on a result of the querying, a flow direction of the data of the target type from the first node to the plurality of nodes.

In a second aspect of the present disclosure, an apparatus for data analysis is provided. The apparatus comprises: a database creation module configured to create, based on respective code repositories of a plurality of nodes downstream of a first node, a plurality of respective field query databases, wherein data of a target type flows through the first node; a database query module configured to query for a field associated with the data of the target type in the plurality of field query databases; and a flow direction determination module configured to determine, based on a result of the querying, a flow direction of the data of the target type from the first node to the plurality of nodes.

In a third aspect of the present disclosure, an electronic device is provided. The electronic device comprises at least one processing unit; and at least one memory coupled to the at least one processing unit and storing instructions for execution by the at least one processing unit. The instructions, when executed by the at least one processing unit, cause the electronic device to perform the method according to the first aspect of the present disclosure.

In a fourth aspect of the present disclosure, a computer-readable storage medium is provided. The computer-readable storage medium has a computer program stored thereon, and the computer program is executable by the processor to implement the method according to the first aspect of the present disclosure.

It is to be understood that the content described in this Summary section of the present disclosure is neither intended to limit key features or important features of embodiments of the present disclosure, nor is it intended to limit the scope of the present disclosure. Other features of the present disclosure will become readily understood from the following description...

### BRIEF DESCRIPTION OF THE DRAWINGS

The above and other features, advantages, and aspects of the various implementations of the present disclosure will become more apparent from the following detailed description taken in conjunction with the accompanying drawings. In the drawings, the same or similar reference numerals refer to the same or similar elements, among which:
FIG. 1 illustrates a schematic diagram of an example environment in which embodiments of the present disclosure can be implemented;
FIG. 2 illustrates a flowchart of a method for data analysis according to some embodiments of the present disclosure;
FIG. 3 illustrates a schematic diagram of an example architecture of a data analysis system according to some embodiments of the present disclosure;
FIG. 4 illustrates a schematic diagram of an example operation process of a data analysis system according to some embodiments of the present disclosure;
FIG. 5 illustrates a schematic structural block diagram of an apparatus for data analysis according to some embodiments of the present disclosure; and
FIG. 6 illustrates a block diagram of an electronic device that can be used to implement some embodiments of the present disclosure.

### DETAILED DESCRIPTION

The principle of the present disclosure will now be described with reference to some embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

Embodiments of the present disclosure will be described in more detail below with reference to the accompanying drawings. Although some embodiments of the present disclosure are shown in the accompanying drawings, it is to be understood that the present disclosure may be implemented in various forms, and should not be interpreted as limited to embodiments set forth herein. On the contrary, these embodiments are provided for a more thorough and complete understanding of the present disclosure. It is to be understood that the drawings and embodiments of the present disclosure are merely for example purposes and are not intended to limit the scope of the present disclosure.

In the description of embodiments of the present disclosure, the term "comprising" and the like should be understood as openness, i.e., "comprising but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

The term "in response to" means that a corresponding event occurs or a condition is satisfied. It will be appreciated that the execution timing of subsequent actions performed in response to the event or condition is not necessarily strongly correlated with the time at which the event occurs or the condition is satisfied. In some cases, subsequent actions may be executed immediately when the event occurs or the condition holds; in other cases, subsequent actions may also be executed a period of time after the event occurs or the condition holds.

It may be understood that data related to the technical solution (including but not limited to the data itself, the obtaining or use of the data) should comply with requirements of corresponding laws and regulations and related regulations.

It may be understood that, before applying the technical solutions disclosed in various embodiments of the present disclosure, the types, usage scope, usage scenario and the like of personal information related to the present disclosure should be notified to the user in an appropriate manner according to the relevant laws and regulations, and the authorization of the user should be obtained.

For example, in response to receiving an active request from a user, prompt information is sent to the user to explicitly prompt the user that the requested operation will need to obtain and use personal information of the user, so that the user may autonomously select, according to the prompt information, whether to provide personal information to software or hardware such as electronic devices, applications, servers or storage media that execute the operation of the technical solution of the present disclosure.

As an optional but non-limiting implementation, in response to receiving an active request from a user, a manner of sending prompt information to the user may be, for example, a pop-up window, and prompt information may be presented in a text manner in the pop-up window. In addition, the pop-up window may further carry a selection control for the user to select "agree" or "disagree" to provide personal information to the electronic device.

It may be understood that the above process of prompting and obtaining a user authorization s is merely illustrative, and does not constitute a limitation on implementations of the present disclosure, and other manners which meet related laws and regulations may also be applied to implementations of the present disclosure.

The term "service" as used herein refers to an application, program, module, process, thread, or the like that can be configured to implement a particular function or perform a particular operation at runtime. One service may implement one or more functions.

As mentioned previously, through data governance, data security, accuracy, availability, and usability may be ensured. In the era of big data, the source of data is extremely wide, various types of data are rapidly generated and explosively increased, which results in increasingly complex relationships between data. In a data governance process, it is often necessary to determine an association relationship between data, also referred to as a "data lineage". The data lineage may describe the flow behavior of the data throughout the whole system, for example, after the data has been collected, how the data flows to the downstream service and storage, and how the data flows out from the storage, and is accessed by other services, and so on.

Through the data lineage analysis technology, the data lineage of service and function granularities may be analyzed. For example, function 1 of service A calls function 2 of service B, service B in turn calls storage C and writes data. However, currently, it cannot be determined which type of data is specifically transmitted to the service B by the service A. For some types of data, there is a lack of effective ways to analyze a complete data flow direction.

Embodiments of the present disclosure provide a data analysis solution for tracking data of a target type. In some embodiments, a code analysis-based field lineage analysis scheme may be employed. For example, field query databases may be created based on code repositories of each node in tracking link, a flow status of a specified field to downstream services and storage is analyzed by a database query, and the data flow direction of a field dimension is finally determined. In this way, if an outflow or access node of a certain type of data is found, the data may be effectively tracked by constructing a trace of this type of data outflow scenario.

In this way, it may be analyzed that the data of the target type is collected under what scenarios, is reported to the server through which links, how to flow in the system, is stored in which storage, and which storage is derived, is accessed and/or used in which scenarios, and is deleted in which scenarios. Thus, the data of the target type may be tracked from an overall perspective.

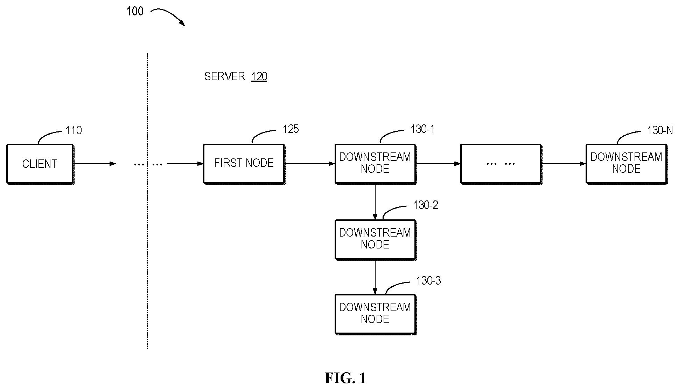

FIG. 1 illustrates a schematic diagram of an example environment 100 in which embodiments of the present disclosure can be implemented.

As shown in FIG. 1, in the environment 100, a client 110 may initiate a request for a service to a server 120. The service may include a Remote Procedure Call (RPC) service or any other suitable service.

The client 110 may be any type of device, including virtual and physical devices. For example, the client 110 may include, but not be limited to, a mobile device, a fixed device or a portable device, and/or the like, including a cell phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an e-book device, a virtual reality (VR) all-in-one headset, a game console, a game book, or any combination of the foregoing, including accessories and peripherals of these devices, or any combination thereof. In some embodiments, the client 110 can also support any type of interface for a user (such as a "wearable" circuit, etc.).

The server 120 may include a plurality of nodes, including a service node having a service function and a storage node having a storage function. Each node may implement a corresponding function using its code repository. A node may be implemented by any type of devices, including virtual and physical devices. Examples of such device may include, but not be limited to, a mainframe, edge computing node, rack server, router computer, server computer, personal computer, mainframe computer, laptop computer, tablet computer, desktop computer, and the like. In some embodiments, the device may include a virtual machine, a container, or a bare metal server.

In response to the request by the client 110, a first node 125 of the server 120 and a plurality of downstream nodes 130-1, 130-2, 130-3, ··· 130-N thereof may be called, where N is any suitable positive integer. In an operation, the data of the target type flows through the first node 125. For example, the data of the target type flows from the first node 125, or the first node 125 accesses a storage node of the data of the target type. In the context of the present disclosure, the type of data may be associated with any suitable classification of data that is accessed or transmitted in a service. As an example, the data of the target type may be some type of user data.

At the server 120, a dedicated management node (not shown) may be arranged for data tracking. Alternatively or additionally, the management node may be served by a service node or storage node. To determine the flow direction of the data of the target type from the first node 125 to the plurality of downstream nodes 130-1, 130-2, 130-3, ··· 130-N thereof, in accordance with an embodiment of the present disclosure, a field query database may be created with code repositories of nodes 130-1, 130-2, 130-3, ··· 130-N. In addition, a query is made for fields associated with the data of the target type in the field query database. Therefore, a situation of the flow of the data of the target type in the service to the downstream may be analyzed.

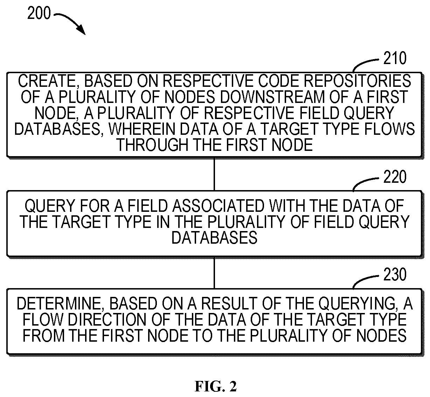

FIG. 2 illustrates a flowchart of a method 200 for data analysis according to some embodiments of the present disclosure. The method 200 may be performed by a node at the server 120 for data tracking. For ease of discussion, the method 200 will be described in conjunction with FIG. 1.

At block 210, a plurality of respective field query databases are created based on respective code repositories of the plurality of nodes 130-1, 130-2, 130-3, ··· 130-N downstream of the first node 125. For example, the respective field query databases may be created for the downstream nodes 130-1, 130-2, 130-3, ··· 130-N after determining that the first node 125 has accessed or passed out the data of the target type. The field query database may be created by building a syntax tree based on the code repository. As an example, the conversion of the code to the database may be implemented with a CodeQL technology. It is to be understood that any suitable technique, algorithm, and programming language, or the like, currently known and developed in the future which is capable of translating code into field query database may be used herein, and the scope of the present disclosure is not limited in this respect.

The creation of the field query database may be executed for a certain node downstream of the first node 125 after tracking to the certain node. That is, with the flow of data, the field query databases for respective downstream nodes 130-1, 130-2, 130-3, ··· 130-N of the first node 125 may be created successively. Alternatively or additionally, the entire invoked service link may be tracked after the service is terminated, the field query databases may be created in parallel for respective downstream node s130-1, 130-2, 130-3, ··· 130-N of the first node 125. The service link may be determined by link tracking (e.g., trace). Alternatively or additionally, considering that a call between services may not convey context information resulting in a difficult tracking to a complete link, the service link may be determined by monitoring dotting points (e.g., metrics) to further enhance the efficiency of link tracking.

At block 220, a query is made for a field associated with the data of the target type in the plurality of field query databases. In some embodiments, a query of the database may be made based on fields associated with the data of the target type in a code repository of the first node 125. For example, a field of a certain function of the first node 125 may be determined to be the field associated with the data of the target type based on metadata information of the first node 125, e.g., Schema information. Further, a query of the database is made for the field.

At block 230, a flow direction of the data of the target type from the first node 225 to the plurality of downstream nodes 130-1, 130-2, 130-3, ··· 130-N is determined based on a result of the query. For example, if a field associated with the data of the target type is found in a field query database of a certain downstream node (referred to as a "second node", e.g., downstream node 130-1), the data of the target type may be determined to flow to the second node. In some embodiments, after it is determined that the data of the target type flows through the second node, a service name of the second node may be obtained. In this way, after all databases are queried, service names of all nodes on the entire flow link of the data of the target type may be obtained, thereby data lineage with a field granularity may be obtained.

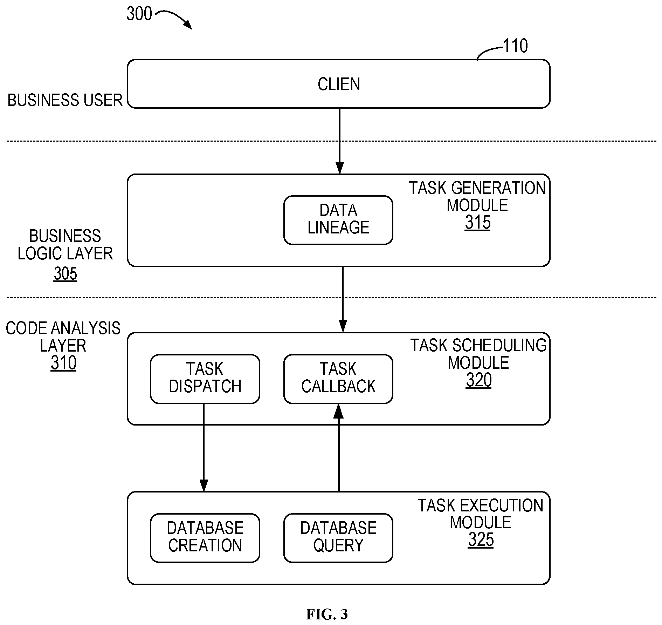

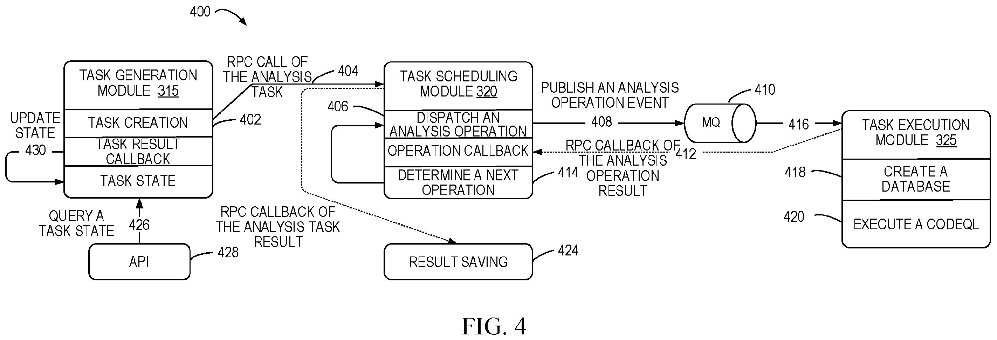

In some embodiments, the creation of the field query databases, the querying, and the determination of the data flow direction may be executed based on scheduling. Some embodiments of this aspect will be discussed below with reference to FIGS. 3 and 4.

Reference is first made to FIG. 3, which illustrates a schematic diagram of an example architecture of a data analysis system 300 according to some embodiments of the present disclosure.

As shown in FIG. 3, a data analysis system 300 may include a business logic layer 305 and a code analysis layer 310. The service logic layer 305 may include a task generation module 315 configured to convert a data lineage analysis task of the client 110 into a code analysis task, the client 110 being as a business user. The code analysis layer 310 may include a task scheduling module 320 and a task execution module 325 for managing scheduling and execution of code analysis tasks, respectively.

FIG. 4 illustrates a schematic diagram of an example operation process 400 of the data analysis system 300 according to some embodiments of the present disclosure.

In the process 400, at 402, the task generation module 315 may execute a task creation to abstract a data lineage task into a code analysis task. The task generation module 315 may obtain the code repository and metadata information (for example, Schema information) corresponding to the first node 125 to generate the code analysis task that needs to be analyzed. For example, after determining that the data of the target type flows through the first node 125, the task generation module 315 may obtain, based on the Schema information of the first node 125, a field that needs to be analyzed as a field A of a function A of the first node 125 (for example, represented as a service A), where the field A carries the data of the target type. In this way, the task generation module 315 may convert the data lineage computing task for the first node 125 into a field flow task in the code repository.

In this example, the services involved are RPC services. As shown in FIG. 4, at 404, the task generation module 315 may execute an RPC call of the analysis task. The code analysis task may be divided into several steps (also referred to as operations). For example, for an analysis task of which RPC services that the downstream flows of the service A, the function A, and the field A flow to, the analysis task may be divided into the following operations: database creation (for example, CodeQL data), obtaining the information of a downstream RPC client, function and field, obtaining service name information corresponding to the RPC client, and the like. The operations may be sequential. After these operations are executed, the result of the entire code analysis task may be finally obtained. Each operation of the code analysis task may be effectively scheduled and managed by the task scheduling module 320.

The task scheduling module 320 may dispatch an analysis operation at 406 and publish an analysis operation event to a Message Queue (MQ) 410 at 408. At 412, the task scheduling module 320 may receive a callback after each operation terminates to obtain an analysis operation result. At 414, the task scheduling module 320 may determine a next operation to be executed, thereby completing the execution of the entire code analysis task.

The task execution module 325 may receive a schedule of the task scheduling module 320. As shown in FIG. 4, at 416, the task execution module 325 may consume the MQ 410 and obtain the analysis operation event from the MG 410. The task execution module 325 may execute a CodeQL statement for different code analysis tasks, e.g., creating a CodeQL database at 418, and executing a CodeQL query statement at 420. As an example, for an analysis task of which RPC services that the downstream flows of the service A, the function A, and the field A flow to, the task execution module may divide the analysis task into three tasks to execute. The task execution module 325 may first create a CodeQL database, then execute the CodeQL query statement of the field flow, and finally obtain the service name information corresponding to the client.

After obtaining the RPC callback of the analysis operation result, the task execution module 325 may execute a result saving at 424. At 426, the task state may be queried by an application program interface (API) 428. At 430, the updated task state may be obtained by a task result callback. In this way, the analysis of the downstream flow condition of a certain field in the service is realized.

In some embodiments, a field lineage analysis scheme based on a flow analysis may be employed. For example, a traffic collection may be performed on a processing node and a storage node that may be involved in a service link, to obtain data traffic transmitted between services, and determine a data flow direction of a data type dimension by analyzing the data. By analyzing the transmission and storage links of the target field, it is determined which interface reveals the data of the target type, how the data will flow, which store the data is finally flowed into, what data is derived, and so on, so that a credible data flow direction may be provided.

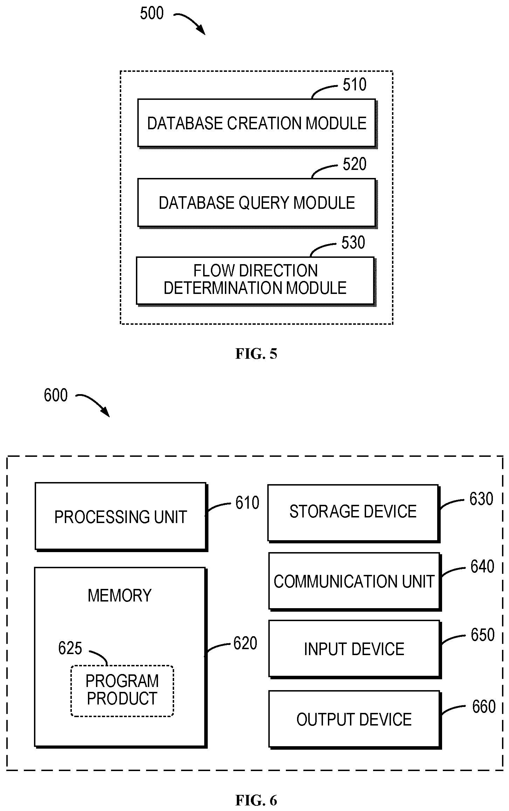

FIG. 5 illustrates a schematic structural block diagram of an apparatus 500 for data analysis according to some embodiments of the present disclosure. The apparatus 500 may be implemented at the service end 120 in FIG. 1.

As shown in FIG. 5, the apparatus 500 includes a database creation module 510, a database query module 520, and a flow direction determination module 530. The database creation module 510 is configured to create a plurality of respective field query databases based on respective code repositories of a plurality of nodes downstream of a first node, wherein data of a target type flows through the first node. The database query module 520 is configured to query for a field associated with the data of the target type in the plurality of field query databases. The flow direction determination module 530 is configured to determine a flow direction of the data of the target type from the first node to the plurality of nodes based on a result of the querying.

In some embodiments, the flow direction determination module 530 may be configured to obtain a service name of a second node of the plurality of nodes through which the data of the target type flows.

In some embodiments, the flow direction determination module 530 may be configured to, in response to the field associated with the data of the target type being found in the field query database associated with the second node, obtain the service name of the second node.

In some embodiments, the database creation module 510, the database query module 520, and the flow direction determination module 530 may be executed based on scheduling.

In some embodiments, the apparatus 500 may further include a field determination module configured to determine the field associated with the data of the target type based on metadata information of the first node.

In some embodiments, the database creation module 510 may be configured to create a respective field query database by building a syntax tree based on the code repository for a code repository of the plurality of code repositories.

It is to be understood that the features related to the data analysis operation discussed above with reference to FIG. 1 to FIG. 4 and the corresponding effects are also applicable to the apparatus 500, and details are not repeated here.

FIG. 6 illustrates a block diagram of an electronic device 600 in which one or more embodiments of the present disclosure may be implemented. For example, the electronic device 600 may be used to implement a data analysis process according to an embodiment of the present disclosure. The electronic device 600 shown in FIG. 6 is merely as an example and does not constitute any limitation to the functionalities and scope of embodiments described herein.

As shown in FIG. 6, the electronic device 600 is in the form of a general-purpose electronic device. Components of the electronic device 600 may include, but not be limited to, one or more processors or processing units 610, a memory 620, a storage device 630, one or more communication units 640, one or more input devices 650, and one or more output devices 660. The processing unit 610 may be a real or virtual processor and capable of performing various processes according to programs stored in the memory 620. In a multi-processor system, a plurality of processing units execute computer-executable instructions in parallel to improve parallel processing capabilities of the electronic device 600.

The electronic device 600 typically includes a plurality of computer storage media. Such media may be any available media accessible to the electronic device 600, including, but not limited to, volatile and non-volatile media, detachable and non-detachable media. The memory 620 may be a volatile memory (e.g., a register, cache, random access memory (RAM)), non-volatile memory (e.g., a read-only memory (ROM), electrically erasable programmable read-only memory (EEPROM), flash memory), or any combination thereof. The storage device 630 may be a detachable and non-detachable medium and may include a machine-readable medium, such as a flash drive, magnetic disk, or any other medium, which may be capable of storing information and/or data (e.g., training data for training) and may be accessed within electronic device 600.

The electronic device 600 may further include additional detachable/non- detachable, volatile/non-volatile storage media. Although not shown in FIG. 6, a magnetic disk drive for reading from or writing into a detachable and nonvolatile magnetic disk (e.g., a "floppy disk") and an optical disk drive for reading from or writing into a detachable and nonvolatile optical disk may be provided. In these cases, each drive may be connected to a bus (not shown) via one or more data medium interfaces. The memory 620 may include a computer program product 625 having one or more program modules configured to perform various methods or actions of various embodiments of the present disclosure.

The communication unit 640 implements communication with another electronic device through a communication medium. Additionally, the functionalities of components of the electronic device 600 may be implemented in a single computing cluster or a plurality of computing machines capable of communicating via a communication connection. Thus, the electronic device 600 may operate in a networked environment using logical connections with one or more other servers, network personal computers (PCs), or another network node.

The input device 650 may be one or more input devices such as a mouse, a keyboard, a trackball, or the like. The output device 660 may be one or more output devices, such as a display, a speaker, a printer, or the like. The electronic device 600 may also communicate, through the communication unit 640 as needed, with one or more external devices (not shown) such as storage devices, display devices, etc., one or more devices that enable a user to interact with the electronic device 600, or any device that enables the electronic device 600 to communicate with one or more other electronic devices (e.g., a network card, a modem and the like). Such communication may be performed via an input/output (I/O) interface (not shown).

According to example implementations of the present disclosure, a computer-readable storage medium is provided, which has one or more computer instructions stored thereon, wherein one or more computer instructions are executed by a processor to implement the method described above.

Aspects of the present disclosure are described herein with reference to flowcharts and/or block diagrams of methods, apparatuses (systems), and computer program products implemented in accordance with the present disclosure. It is to be understood that each block of the flowchart and/or block diagram(s), and combinations of blocks in the flowchart and/or block diagram(s), may be implemented by computer-readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce an apparatus to implement the functions/actions specified in the flowchart and/or block diagram(s). These computer-readable program instructions may also be stored in a computer-readable storage medium, these instructions cause the computer, programmable data processing apparatus and/or other devices to function in a particular manner, such that the computer-readable medium storing instructions includes an article of manufacture including instructions to implement aspects of the functions/actions specified in the flowchart and/or block diagram(s).

The computer-readable program instructions may also be loaded onto a computer, other programmable data processing apparatus, or other devices, to cause a series of operating steps to be performed on a computer, other programmable data processing apparatus, or other devices to produce a computer-implemented process. Thus, the instructions executed on a computer, other programmable data processing apparatus, or other devices implement the functions/actions specified in one or more blocks in the flowchart and/or block diagram.

The flowcharts and block diagrams in the drawings show architecture, functionality, and operation of possible implementations of systems, methods, and computer program products according to various implementations of the present disclosure. In this regard, each block in the flowcharts or block diagrams may represent a module, program segment, or part of an instruction that includes one or more executable instructions for implementing a specified logical function. In some alternative implementations, the functions noted in the blocks may also occur out of the order noted in the drawings. For example, two consecutive blocks may actually be executed substantially in parallel, or the blocks may sometimes be executed in a reversed order, depending on the functionality involved. It is also noted that each block in the block diagrams and/or flowcharts, as well as combinations of blocks in the block diagrams and/or flowcharts, may be implemented with a dedicated hardware-based system that performs specified functions or actions, or may be implemented with a combination of dedicated hardware and computer instructions.

Various implementations of the present disclosure have been described above for purposes of illustration, but being not intended to be exhaustive or limited to implementations disclosed. Modifications and variations will be apparent to those of ordinary skill in the art without departing from the scope and spirit of the various illustrated implementations. The selection of terminology used herein is intended to best explain the principles of the implementations, practical applications, or improvements over technologies in the marketplace, or to enable other ordinary skill in the art to understand the implementations disclosed herein.

## Claims

1. A method for data analysis, comprising:
creating, based on respective code repositories of a plurality of nodes downstream of a first node, a plurality of respective field query databases, wherein data of a target type flows through the first node;
querying for a field associated with the data of the target type in the plurality of field query databases;
and
determining, based on a result of the querying, a flow direction of the data of the target type from the first node to the plurality of nodes.

2. The method of claim 1, wherein determining the flow direction comprises:
obtaining a service name of a second node of the plurality of nodes through which the data of the target type flows.

3. The method of claim 2, wherein obtaining the service name of the second node comprises:
in response to the field associated with the data of the target type being found in the field query database associated with the second node, obtaining the service name of the second node.

4. The method of claim 1, wherein the creation of the field query databases, the querying of the field query databases, and the determination of the flow direction are executed based on scheduling.

5. The method of claim 1, further comprising:
determining the field associated with the data of the target type based on metadata information of the first node.

6. The method of claim 1, wherein creating the plurality of field query databases comprises:
for a code repository of the plurality of code repositories,
creating the respective field query database by building a syntax tree based on the code repository.

7. An apparatus for data analysis, comprising:
a database creation module configured to create, based on respective code repositories of a plurality of nodes downstream of a first node, a plurality of respective field query databases, wherein data of a target type flows through the first node;
a database query module configured to query for a field associated with the data of the target type in the plurality of field query databases; and
a flow direction determination module configured to determine, based on a result of the querying, a flow direction of the data of the target type from the first node to the plurality of nodes.

8. The apparatus of claim 7, wherein the flow direction determination module is configured to:
obtain a service name of a second node of the plurality of nodes through which the data of the target type flows.

9. The apparatus of claim 8, wherein the flow direction determination module is configured to:
in response to the field associated with the data of the target type being found in the field query database associated with the second node, obtain the service name of the second node.

10. The apparatus of claim 7, wherein the database creation module, the database query module, and the flow direction determination module are executed based on scheduling.

11. The apparatus of claim 7, further comprising:
a field determination module configured to determine the field associated with the data of the target type based on metadata information of the first node.

12. The apparatus of claim 7, wherein the database creation module is configured to:
for a code repository of the plurality of code repositories,
create the respective field query database by building a syntax tree based on the code repository.

13. An electronic device comprising:
at least one processing unit; and
at least one memory coupled to the at least one processing unit and storing instructions for execution by the at least one processing unit, the instructions, when executed by the at least one processing unit, causing the device to perform the method of any of claims 1 to 6.

14. A computer-readable storage medium having a computer program stored thereon, the computer program, when executed by a processor, implementing the method of any of claims 1 to 6.
